Europäisches Patentamt

European Patent Office

Office européen des brevets

(19)

(11) **EP 1 276 287 A2**

(12) **EUROPEAN PATENT APPLICATION**

(43) Date of publication:
**15.01.2003 Bulletin 2003/03**

(51) Int Cl.7: **H04L 25/02**

(21) Application number: **02254728.5**

(22) Date of filing: **05.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **11.07.2001 KR 2001041559**

(71) Applicant: **SAMSUNG ELECTRONICS CO., LTD.
Suwon-City, Kyungki-do (KR)**

(72) Inventor: **Hwang, Chan-soo
Yongin-city, Kyungki-do (KR)**

(74) Representative: **Greene, Simon Kenneth
Elkington and Fife,
Prospect House,
8 Pembroke Road
Sevenoaks, Kent TN13 1XR (GB)**

(54) **Estimation of channel characteristics**

(57)    Disclosed is a signal receiving apparatus adapted for use with a time-variant channel, the signal receiving apparatus being adapted to receive, as a received signal, a signal transmitted from a transmitting side of a communication system through the channel with a time-varying characteristic and restore original user information from the received signal, comprising: a first channel characteristic estimator adapted to estimate a first delay characteristic signal representing the delay characteristic of the channel from a transmitted signal restored and the received signal, and output the estimated first delay characteristic signal; a first channel characteristic - predictor adapted to decimate the estimated first delay characteristic signal applied thereto from the first channel characteristic estimator, predict the characteristic values of the channel from the decimated result of the first delay characteristic signal, interpolate the predicted channel characteristic values, and output the interpolated result of the channel characteristic values as a first predictive characteristic signal representing the predicted characteristic of the channel; and a first receiver adapted to estimate a decision value from the first predictive characteristic signal and the received signal, restore the transmitted signal from the estimated decision value, and output the restored transmitted signal to the first channel characteristic estimator, whereby the original user information is restored from the decision value. Thus, a correct prediction of the characteristic of the channel allows a more correct restoration of original user information, and there is no need to obtain a tentative decision value, thereby results in a reduction in the manufacturing cost along with achievement of a simpler structure of hardware.

FIG. 2

EP 1 276 287 A2

**Description**

The present invention relates to signal receiving in a communication system, and more particularly, to a signal receiving apparatus and method adapted for use with a time-variant channel.

In general, for a communication system including a transmitting side and a receiving side, the receiving side must know a current decision value of a signal received by the receiving side in order to estimate the characteristic of a channel. Herein, the decision value means transmission information restored. At this time, after an elapse of a certain training period of time, the use of the decision value obtains a channel estimate obtained by assuming the characteristic of a channel over which a transmitting signal has been transmitted.

In the case where one of conventional signal receiving apparatuses estimates the characteristic of a channel varying with time, a reduction in a time delay of the estimated channel characteristic requires a decrease in a time spent in estimation of the decision value. For this purpose, for example, in Maximum-Likelihood Sequence Estimation (hereinafter, referred to as "MLSE"), a tentative decision value determined with reducing a depth of a traceback is used. Herein, MLSE is also called Maximum Likelihood Sequence Detection (MLSD), which is described in Proakis, "Digital Communications", Prentice Hall Press, pp. 583-602 (1995). However, since the tentative decision value has a high error rate, there has been a problem in that the characteristic of a channel estimated by using the tentative decision value also has an increased error. Consequently, the above-mentioned conventional signal receiving apparatus has a disadvantage in that since there is a great difference between the estimated characteristic of a channel and the real characteristic of a channel, a decision value used to restore user information cannot be estimated correctly from the estimated channel characteristic with an error.

To overcome this problem, another conventional signal receiving apparatus employs a linear predictor (not shown) for estimating the characteristic of a time-delayed channel and predicting the characteristic of a current channel from the estimated characteristic of a delayed channel. Herein, the linear predictor can be embodied through a Wiener solution utilizing an autocorrelation of a channel. The Wiener solution is disclosed in an article in IEEE TRANSACTIONS ON COMMUNICAITONS, Vol. 46, pp 464-472, 1998, Gregory E. Bottomley: "Unification of MLSE receivers and extension to time-varying channels". For the sake of simplicity of the solution, a method of linearly predicting the characteristic of a channel in which only a gradient of the channel is estimated and the channel is approximated with a linear function is described in U.S. patent No. 5,465,276 issued November 7, 1995 to Larsson, et al., and entitled "Method of forming a channel estimate for a time-varying radio channel". However, for the above-mentioned conventional signal receiving apparatus, there also arises a problem in that when the range of the characteristic of a channel to be predicted is long, the above-mentioned predictors cannot correctly predict the characteristic of a channel. Thus, the latter of two conventional signal receiving apparatuses as the same as the former mentioned above also employs a tentative decision value, so that an error of the tentative decision value contributes to an incorrect restoration of user information.

According to the present invention, there is provided a signal receiving apparatus adapted for use with a time-variant channel, the signal receiving apparatus which receives, as a received signal, a signal transmitted through the channel with a time-varying characteristic and which restores original user information from the received signal, including: a first channel characteristic estimator to estimate a first delay characteristic signal representing a delay characteristic of the channel from a transmitted signal restored and the received signal, and output the estimated first delay characteristic signal; a first channel characteristic predictor to decimate the estimated first delay characteristic signal input from the first channel characteristic estimator, predict the characteristic values of the channel from the decimated result of the first delay characteristic signal, interpolate the predicted channel characteristic values, and output the interpolated result of the channel characteristic values as a first predictive characteristic signal representing the predicted characteristic of the channel; and a first receiver adapted to estimate a decision value from the first predictive characteristic signal and the received signal, restore the transmitted signal from the estimated decision value, and output the restored transmitted signal to the first channel characteristic estimator, whereby the original user information is restored from the decision value.

The invention thus provides a signal receiving apparatus adapted for use with a time-variant channel which can correctly estimate the characteristic of a time-delayed channel and correctly restore original user information using the estimated characteristic of the time-delayed channel.

In embodiments, the step of estimating the first delay characteristic signal includes minimizing an error ($e_k$) being the difference between the measured received signal and values calculated from the estimated first delay characteristic signal and the restored transmitted signal. Thus, the apparatus uses a two-stage process, first using an error minimization technique and then a predictor approach.

According to another aspect of the present invention, there is also provided a signal receiving apparatus adapted for use with a time-variant channel, the signal receiving apparatus which receives, as a received signal, a signal transmitted through the channel with a time-varying characteristic and restores original user information from the received signal, including: a second decimator to decimate a transmitted signal restored and output the decimated result of the restored signal; a third decimator to decimate the received signal and output the decimated result of the received signal; a second channel characteristic estimator to estimate a second delay characteristic signal representing the delay characteristic of the channel from the decimated results input from the second and third decimators, and output the estimated second delay characteristic signal; a second channel characteristic predictor to predict characteristic values of the channel from the second delay characteristic signal input from the second channel characteristic estimator, interpolate the predicted channel characteristic values, and output the interpolated result of the channel characteristic values as a second predictive characteristic signal representing the predicted characteristic of the channel; and a second receiver to estimate a decision value from the second predictive characteristic signal and the received signal, restore the transmitted signal from the estimated decision value, and output the restored transmitted signal to the second decimator, whereby the original user information is restored from the decision value.

According to still another aspect of the present invention, there is also provided a signal receiving apparatus adapted for use with a time-variant channel, the signal receiving apparatus which receives, as a received signal, a signal transmitted through the channel with a time-varying characteristic and restores original user information from the received signal, including: a first transmitted signal regenerator to regenerate a transmitted signal restored from a restored user information and output the regenerated transmitted signal; a third channel characteristic estimator to estimate a third delay characteristic signal representing the delay characteristic of the channel from the regenerated transmitted signal input from the first transmitted signal regenerator and the received signal, and output the estimated third delay characteristic signal; a third channel characteristic predictor to decimate the third delay characteristic signal input from the third channel characteristic estimator, predict characteristic values of the channel from the decimated result of the third delay characteristic signal, interpolate the predicted channel characteristic values, and output the interpolated result of the channel characteristic values as a third predictive characteristic signal representing predicted characteristic of the channel; a third receiver to estimating a decision value from the third predictive characteristic signal input from the third channel characteristic predictor and the received signal and output the estimated decision value; and a decoder to decode the estimated decision value input from the third receiver and output the decoded result as the restored user information obtained by restoring the original user information to the first transmitted signal regenerator.

According to yet another aspect of the present invention, there is also provided a signal receiving apparatus adapted for use with a time-variant channel, the signal receiving apparatus which receives, as a received signal, a signal transmitted through the channel with a time-varying characteristic and restores original user information from the received signal, including: a second transmitted signal regenerator to regenerate a transmitted signal restored from restored user information and output the regenerated transmitted signal; a fifth decimator to decimate the regenerated transmitted signal input from the second transmitted signal regenerator and output the decimated result of the regenerated transmitted signal; a sixth decimator to decimate the received signal and output the decimated result of the received signal; a fourth channel characteristic estimator to estimate a fourth delay characteristic signal representing the delay characteristic of the channel from the decimated results input from the fifth and sixth decimators, and output the estimated fourth delay characteristic signal; a fourth channel characteristic predictor to predict characteristic values of the channel from the fourth delay characteristic signal input from the fourth channel characteristic estimator, interpolate the predicted channel characteristic values, and output the interpolated result of the channel characteristic values as a fourth predictive characteristic signal representing the predicted characteristic of the channel; a fourth receiver to estimate a decision value from the fourth predictive characteristic signal and the received signal, and output the estimated decision value; and a second decoder to decode the estimated decision value input from the fourth receiver and output the decoded result as the restored user information obtained by restoring the original user information to the second transmitted signal regenerator.

According to yet another aspect of the present invention, there is provided a signal receiving method performed in the signal receiving apparatus adapted for use with a time-variant channel, including: (a) estimating the first delay characteristic signal using the received signal and the restored transmitted signal; (b) decimating the estimated first delay characteristic signal, predicting the characteristic values of the channel from the decimated result of the first delay characteristic signal and interpolating the predicted channel characteristic values so as to obtain the first predictive characteristic signal; and (c) estimating the decision value from the first predictive characteristic signal and the received signal, and restoring the transmitted signal from the estimated decision value so as to obtain the restored transmitted signal.

The invention thus provides a signal receiving method performed in the signal receiving apparatus adapted for use with the time-variant channel.

According to yet another aspect of the present invention, there is also provided a signal receiving method performed n the signal receiving apparatus adapted for use with a time-variant channel, including: (a) decimating the transmitted signal restored and the received signal; (b) estimating the second delay characteristic signal using the decimated results; (c) predicting the characteristic values of the channel from the estimated second delay characteristic signal and interpolating the predicted channel characteristic values so as to obtain the second predictive characteristic signal; and (d) estimating the decision value from the second predictive characteristic signal and the received signal, and restoring the transmitted signal from the estimated decision value so as to obtain the restored transmitted signal.

According to yet another aspect of the present invention, there is also provided a signal receiving method performed in the signal receiving apparatus adapted for use with a time-variant channel, including: (a) regenerating a transmitted signal restored from the restored user information and obtaining the regenerated transmitted signal; (b) estimating the third delay characteristic signal using the regenerated transmitted signal and the received signal; (c) decimating the estimated third delay characteristic signal, predicting the characteristic values of the channel from the decimated result of the third delay characteristic signal, interpolating the predicted channel characteristic values so as to obtain the third predictive characteristic signal; (d) estimating the decision value from the third predictive characteristic signal and the received signal; and (e) decoding the estimated decision value so as to obtain the restored user information.

According to yet another aspect of the present invention, there is also provided a signal receiving method performed in the signal receiving apparatus adapted for use with a time-variant channel, including: (a) regenerating a transmitted signal restored from the restored user information and obtaining the regenerated transmitted signal; (b) decimating the regenerated transmitted signal and the received signal; (c) estimating the fourth delay characteristic signal using the decimated results; (d) predicting the characteristic values of the channel from the estimated fourth delay characteristic signal and interpolating the predicted channel characteristic values so as to obtain the fourth predictive characteristic signal; (e) estimating the decision value from the fourth predictive characteristic signal and the received signal; and (f) decoding the estimated decision value so as to obtain the restored user information.

The advantages of the present invention will become more apparent by describing in detail a preferred embodiment thereof with reference to the attached drawings in which:

FIG. 1 is a block diagram illustrating the entire construction of a general communication system for explaining a signal receiving apparatus adapted for use with a time-variant channel according to the present invention;

FIG. 2 is a block diagram illustrating the construction of a signal receiving apparatus adapted for use with a time-variant channel according to a first embodiment of the present invention;

FIG. 3 is a flowchart illustrating a signal receiving method according to the present invention to be implemented in the signal receiving apparatus shown in FIG. 2;

FIG. 4 is a block diagram illustrating the construction of a signal receiving apparatus adapted for use with a time-variant channel according to a second embodiment of the present invention;

FIG. 5 is a flowchart illustrating a signal receiving method of the present invention to be implemented in the signal receiving apparatus shown in FIG. 4;

FIG. 6 is a block diagram illustrating the construction of a signal receiving apparatus adapted for use with a time-variant channel according to a third embodiment of the present invention;

FIG. 7 is a flowchart illustrating a signal receiving method of the present invention to be implemented in the signal receiving apparatus shown in FIG. 6;

FIG. 8 is a block diagram illustrating the construction of a signal receiving apparatus adapted for use with a time-variant channel according to a fourth embodiment of the present invention;

FIG. 9 is a flowchart illustrating a signal receiving method of the present invention to be implemented in the signal receiving apparatus shown in FIG. 8; and

FIGs. 10(a) to 10(c) are graphs illustrating the comparison of the characteristics between the signal receiving apparatus and method according to the present invention and a signal receiving apparatus and method according to the prior art.

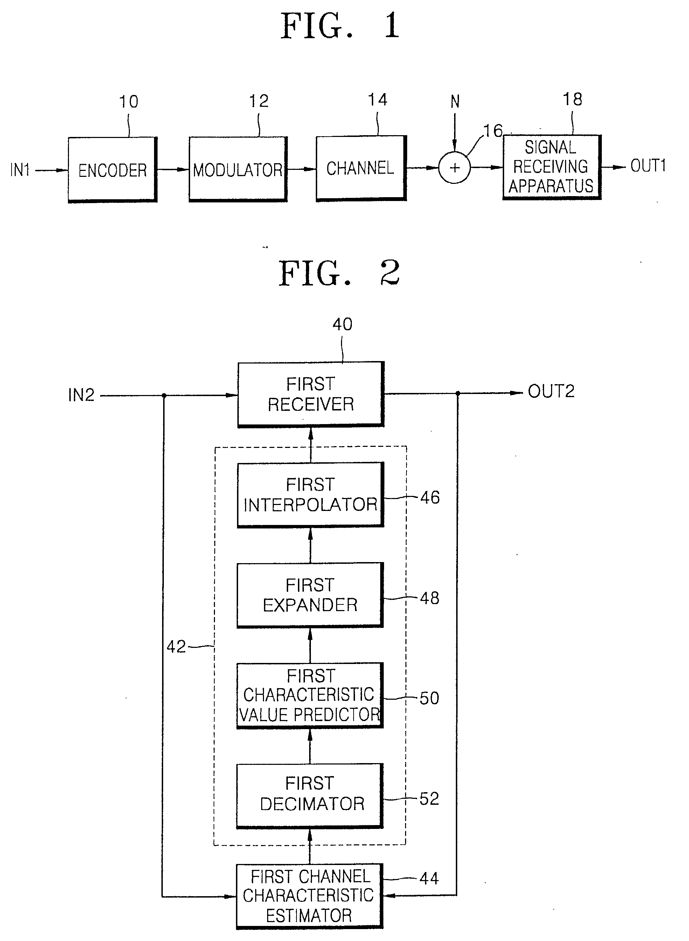

Hereinafter, a construction and operation of a general communication system to which a signal receiving apparatus adapted for use with a time-variant channel can be applied according to the present invention will be in detail described with reference to FIG. 1.

FIG. 1 is a block diagram illustrating the entire construction of a general communication system for explaining a signal receiving apparatus adapted for use with a time-variant channel according to the present invention.

Referring to FIG. 1, a communication system includes an encoder 10, a modulator 12, a channel 14, a synthesizer 16 and a signal receiving apparatus 18. Herein, the encoder 10 and the modulator 12 correspond to a transmitting side. In FIG. 1, the encoder 10 encodes original user information input through an input terminal IN1 and outputs the encoded result as transmitting information to the modulator 12. At this time, the modulator 12 modulates the transmitting information input from the encoder 10 and outputs the modulated result of transmitting information as a transmission signal. The transmission signal output from the modulator 12 is transmitted through the channel 14 with a time-varying characteristic. At this time, the transmission signal transmitted through the channel 14 is synthesized with a noise N and the synthesized result is sent to a signal receiving apparatus 18. More specifically, the synthesizer 16 synthesizes a signal which has passed through the channel 14 and a noise N, and outputs the synthesized result to the signal receiving apparatus 18. Herein, the signal receiving apparatus 18 receives, as a received signal, a signal output from the synthesizer 16, i.e., a transmitted signal with a noise sent through the channel 14, restores original user information from the receiving signal, and outputs the restored result as restored user information through an output terminal OUT1.

Now, a construction and operation of a signal receiving apparatus 18 adapted for use with a time-variant channel according to each of various embodiments of the present invention to be applied to a communication system shown in FIG. 1, and a signal receiving method according to the present invention to be performed in each of the various embodiments will be in detail described with reference to the accompanying drawings.

FIG. 2 is a block diagram illustrating the construction of a signal receiving apparatus adapted for use with a time-variant channel according to a first embodiment of the present invention.

Referring to FIG. 2, the signal receiving apparatus includes a first receiver 40, a first channel characteristic predictor 42 and a first channel characteristic estimator 44.

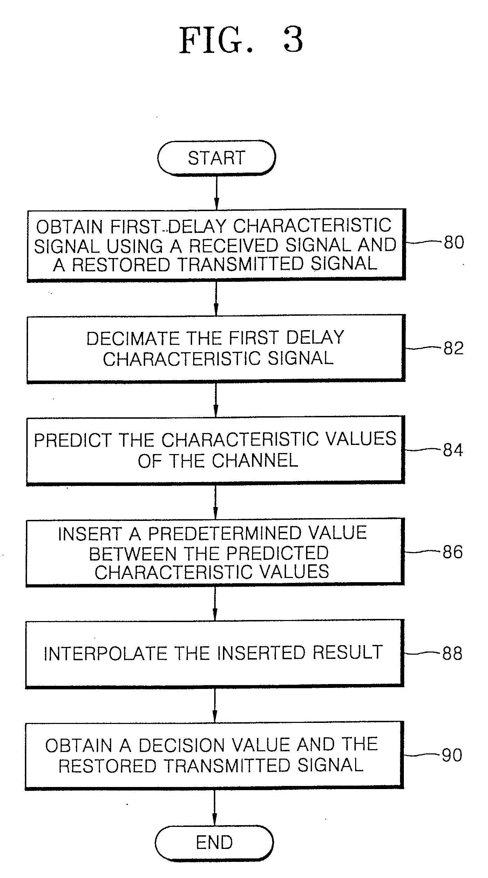

FIG. 3 is a flowchart illustrating a signal receiving method according to the present invention to be implemented in the signal receiving apparatus shown in FIG. 2, in which the signal receiving method consists of estimating the delay characteristic of a channel (step 80), predicting the characteristic of the channel (steps 82 through 88) and obtaining a decision value and a transmitted signal restored (step 90).

The signal receiving apparatus of the FIG. 2 of the present invention receives as a received signal, a signal transmitted from a transmitting side of a communication system through the channel 14 of FIG. 1 with a time-varying characteristic and restores original user information from the received signal. For this purpose, the first channel characteristic estimator 44 first estimate a first delay characteristic signal representing the delay characteristic of the channel 14 from the restored transmitted signal output through an output terminal OUT2 from the first receiver 40 and the received signal input from the input terminal IN2, and output the estimated first delay characteristic signal to the first channel characteristic predictor 42 (step 80). Herein, the characteristic of a channel means amplitude and/or phase of each tap in a channel.

After step 80, the first channel characteristic predictor 42 for compensating for a time delay of the estimated channel characteristic performs a decimation, i.e., undersampling for the first delay characteristic signal input from the first channel characteristic estimator 44, predict the characteristic values of the channel from the decimated result of the first delay characteristic signal, interpolate the predicted channel characteristic values, and output the interpolated result of the channel characteristic values as a first predictive characteristic signal representing the predicted characteristic of the channel 14 to the first receiver 40 (steps 82 through 88). The term "decimation" is used in this application to refer to undersampling, and is not intended to imply undersampling by a factor 10.

To perform these operations, the first channel characteristic predictor 42 may be implemented with a first decimator 52, a first characteristic value predictor 50, a first expander 48 and a first interpolator 46. Herein, after step 80, the first decimator 52 serves to decimate the first delay characteristic signal input from the first channel characteristic estimator 44, and output the decimated result of the first delay characteristic signal to the first characteristic value predictor 50 (step 82). After step 82, the first characteristic value predictor 50 acts to predict the characteristic values of the channel 14 from the decimated result of the first delay characteristic signal input from the first decimator 52, and output the predicted channel characteristic values to the first expander 48 (step 84). After step 84, the first expander 48 functions to insert a predetermined value, for example, "0" between the predicted channel characteristic values input from the first characteristic value predictor 50, and output the inserted result to the first interpolator 46 (step 86). After step 86, the first interpolator 46 acts to interpolate the inserted result input from the first expander 48, and output the interpolated result as a first predictive characteristic signal to the first receiver 40 (step 88).

After step 88, the first receiver 40 acts to estimate a decision value from the first predictive characteristic signal input from the first channel characteristic predictor 42 and the received signal input from the input terminal IN2, restore the transmitted signal from the estimated decision value, and output the restored transmitted signal to the first channel characteristic estimator 44 and the estimated decision value to, for example, a decoder (not shown) through the output terminal OUT2. At this time, the decoder decodes the estimated decision value input from the first receiver 40, and outputs the decoded result as the original user information restored.

For example, assuming that the period of time required for estimating the decision value in the first receiver 40 is τ, and signals are input/output to/from each of the constituent elements 40, 42 and 44 shown in FIG. 2 at time t, the first channel characteristic predictor 42 generates the first predictive characteristic signal using the received signal applied to the first channel characteristic estimator 44 from the input terminal IN2 at time t-τ -1 and the restored transmitted signal corresponding to the transmitted signal output from the modulator 12 at time t-τ -1. At this time, the first predictive characteristic signal exhibits the predicted characteristic of the channel 14 through which the transmitted signal passes at time t. Through the use of the first predictive characteristic signal and the received signal input through the input terminal IN2 at time t, the first receiver 40 obtains the restored transmitted signal which is output from the modulator 12 at time t-τ.

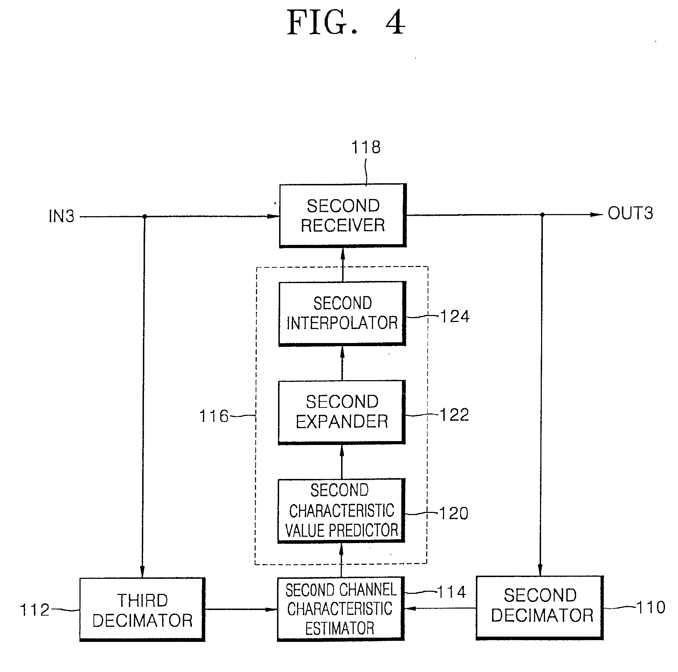

FIG. 4 is a block diagram illustrating the construction of a signal receiving apparatus adapted for use with a time-variant channel according to a second embodiment of the present invention.

Referring to FIG. 4, the signal receiving apparatus includes a second channel characteristic estimator 114, a second and third decimators 110 and 112, a second channel characteristic predictor 116 and a second receiver 118.

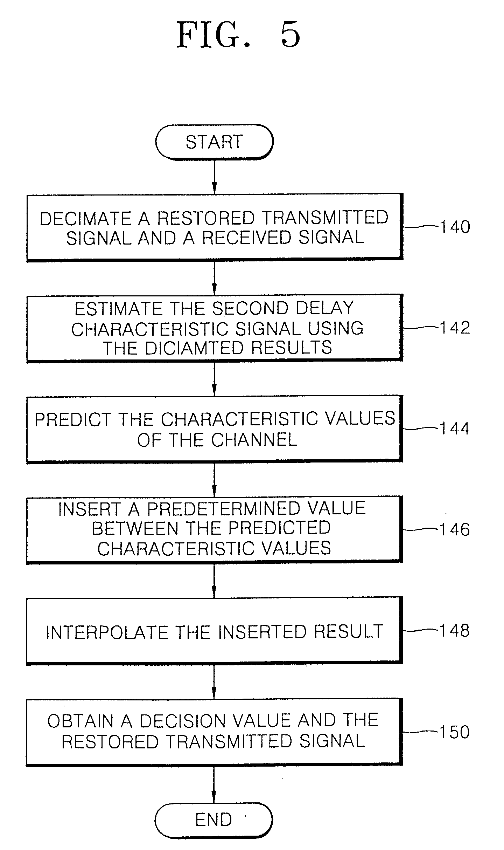

FIG. 5 is a flowchart illustrating a signal receiving method of the present invention to be implemented in the signal receiving apparatus shown in FIG. 4, in which the signal receiving method consists of estimating the delay characteristic of a channel (steps 140 and 142), predicting the characteristic of the channel (steps 144 through 148) and obtaining a decision value and a transmitted signal restored (step 150).

Unlike the signal receiving apparatus shown in FIG. 2, the signal receiving apparatus shown in FIG. 4 does not perform a decimation operation when predicting the characteristic of the channel, but performs it just prior to the estimation of the delay characteristic of the channel. Except for this, the signal receiving apparatus shown in FIG. 4 and the signal receiving method shown in FIG. 5 to be implemented in the signal receiving apparatus are identical to those as shown in FIGs. 2 and 3.

First, the restored transmitted signal and the received signal are decimated (step 140). For this purpose, the second decimator 110 decimates the restored transmitted signal input from the second receiver 118 and outputs the decimated result of the restored signal to the second channel characteristic estimator 114. Also, the third decimator 112 decimates the received signal input from the input terminal IN3 and outputs the decimated result of the received signal to the second channel characteristic estimator 114.

After step 140, the second channel characteristic estimator 114 estimates a second delay characteristic signal representing the delay characteristic of the channel 14 from the decimated results input from the second and third decimators 110 and 112, and outputs the estimated second delay characteristic signal to the second channel characteristic predictor 116 (step 142).

After step 142, the second channel characteristic predictor 116 for compensating for a time delay of the estimated channel characteristic predicts the characteristic values of the channel 14 from the second delay characteristic signal input from the second channel characteristic estimator 114, interpolate the predicted channel characteristic values, and output the interpolated result of the channel characteristic values as a second predictive characteristic signal representing the predicted characteristic of the channel 14 to the second receiver 118 (steps 144 through 148).

To perform these operations, the second channel characteristic predictor 116 may be implemented with a second characteristic value predictor 120, a second expander 122 and a second interpolator 124. Herein, after step 142, the second characteristic value predictor 120 predicts the characteristic values of the channel 14 from the second delay characteristic signal input from the second channel characteristic estimator 114, and outputs the predicted channel characteristic values to the second expander 122 (step 144). After step 144, the second expander 122 inserts a predetermined value, for example, "0" between the predicted channel characteristic values input from the second characteristic value predictor 120, and output the inserted result to the second interpolator 124 (step 146). After step 146, the second interpolator 124 interpolates the inserted result input from the second expander 122, and output the interpolated result as a second predictive characteristic signal to the second receiver 118 (step 148).

After step 148, the second receiver 118 estimates a decision value from the second predictive characteristic signal input from the second channel characteristic predictor 116 and the received signal input from the input terminal IN3, restore the transmitted signal from the estimated decision value, and output the restored transmitted signal to the second decimator 110 and the estimated decision value to a decoder (not shown) through the output terminal OUT3. At this time, the decoder decodes the estimated decision value input from the second receiver 118, and outputs the decoded result as the original user information restored.

In the meantime, in order to more correctly estimate a decision value than in case of the signal receiving apparatus and method as mentioned above according the present invention, instead of employing the restored transmitted signal output from the first or second receiver (40 or 118) to estimate the delay characteristic of a channel, a transmitted signal regenerated from the restored user information may be employed. For this purpose, each construction and operation of a signal receiving apparatus adapted for use with a time-variant channel according to each of various embodiments of the present invention and a signal receiving method according to the present invention to be implemented in a signal receiving apparatus according to each of the various embodiments will be in detail described hereinafter with reference to the accompanying drawings.

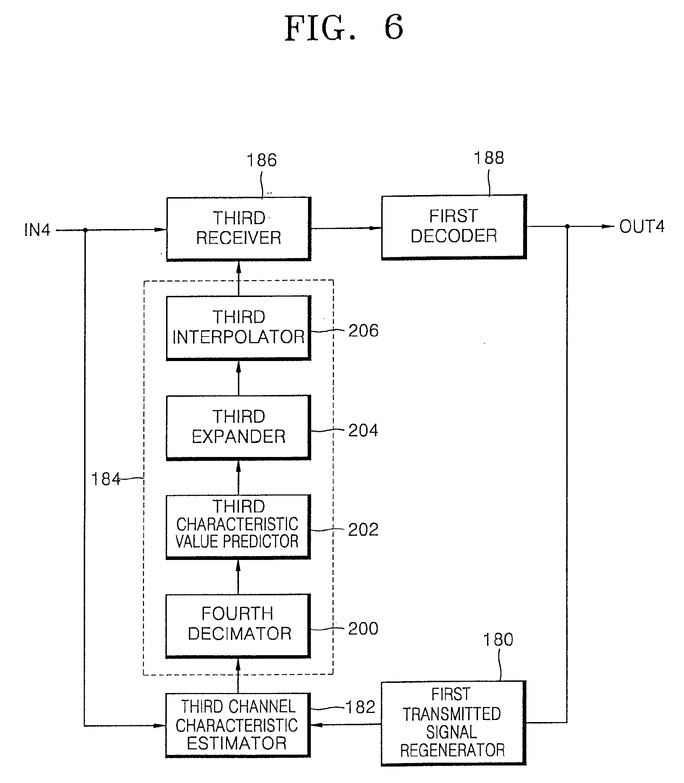

FIG. 6 is a block diagram illustrating the construction of a signal receiving apparatus adapted for use with a time-variant channel according to a third embodiment of the present invention.

Referring to FIG. 6, the signal receiving apparatus includes a first transmitted signal regenerator 180, a third channel characteristic estimator 182, a third channel characteristic predictor 184, a third receiver 118 and a first decoder 188.

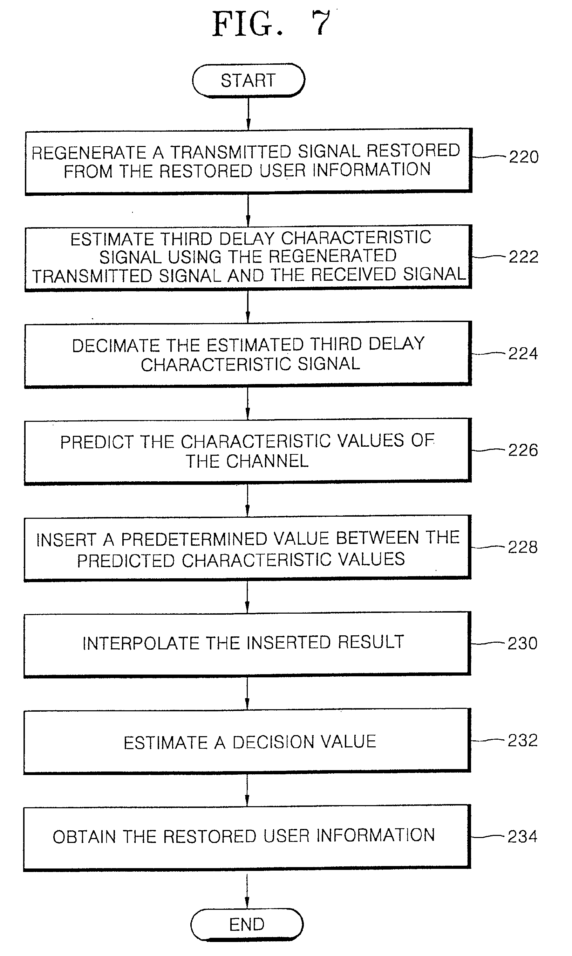

FIG. 7 is a flowchart illustrating a signal receiving method of the present invention to be implemented in the signal receiving apparatus shown in FIG. 6, in which the signal receiving method consists of estimating the delay characteristic of a channel (steps 220 and 222), predicting the characteristic of the channel (steps 224 through 230) and obtaining a decision value and a restored user information (steps 232 and 234).

Unlike the signal receiving apparatus shown in FIG. 2 or 4, the signal receiving apparatus shown in FIG. 6 and the signal receiving method shown in FIG. 7 to be implemented in the signal receiving apparatus are identical to the receiving apparatus as shown in FIG. 2 or 4 and the signal receiving method shown in FIG. 3 or 5 except that a transmitted signal regenerated from the restored user information output from the first decoder 188 is employed instead of employing the restored transmitted signal output from the first or second receiver (40 or 118), to estimate the delay characteristic of a channel.

First, the first transmitted signal regenerator 180 regenerates a transmitted signal restored from the restored user information output from the first decoder 188 and outputs the regenerated transmitted signal to the third channel characteristic estimator 182 (step 220). For this purpose, the first transmitted signal regenerator 180 may be implemented with an encoder (not shown) and a modulator (not shown). Herein, the encoder encodes the restored user information and outputs the encoded result to the modulator. The modulator modulates the encoded result input from the encoder in the same scheme as the modulator 12 shown in FIG. 1 and outputs the modulated result as a regenerated transmitted signal to the third channel characteristic estimator 182.

After step 220, the third channel characteristic estimator 182 estimates a third delay characteristic signal representing the delay characteristic of the channel 14 from the regenerated transmitted signal input from the first transmitted signal regenerator 180 and the received signal input through an input terminal IN4, and outputs the estimated third delay characteristic signal to the third channel characteristic predictor 184 (step 222).

After step 222, the third channel characteristic predictor 184 decimates the third delay characteristic signal input from the third channel characteristic estimator 182, predict the characteristic values of the channel 14 from the decimated result of the third delay characteristic signal, interpolate the predicted channel characteristic values, and output the interpolated result of the channel characteristic values as a third predictive characteristic signal representing the predicted characteristic of the channel 14 to the third receiver 186 (steps 224 through 230).

To perform these operations, the third channel characteristic predictor 184 may be implemented with a fourth decimator 200, a third characteristic value predictor 202, a third expander 204 and a third interpolator 206. Herein, after step 222, the fourth decimator 200 serves to decimate the third delay characteristic signal input from the third channel characteristic estimator 182, and output the decimated result of the third delay characteristic signal to the third characteristic value predictor 202 (step 224). After step 224, the third characteristic value predictor 202 acts to predict the characteristic values of the channel 14 from the decimated result of the third delay characteristic signal input from the fourth decimator 200, and output the predicted channel characteristic values to the third expander 204 (step 226). After step 226, the third expander 204 functions to insert a predetermined value, for example, "0" between the predicted channel characteristic values input from the third characteristic value predictor 202, and output the inserted result to the third interpolator 206 (step 228). After step 228, the third interpolator 206 acts to interpolate the inserted result input from the third expander 204, and output the interpolated result as a third predictive characteristic signal to the third receiver 186 (step 230).

After step 230, the third receiver 186 acts to estimate a decision value from the third predictive characteristic signal input from the third channel characteristic predictor 184 and the received signal input from the input terminal IN4 and output the estimated decision value to the first decoder 188 (step 232). After step 232, the first decoder 188 decodes the estimated decision value input from the third receiver 186 and output the decoded result as the restored user information obtained by restoring the original user information to the first transmitted signal regenerator 180 while outputting it through an output terminal OUT4 (step 234). For this purpose, the first decoder 188 may be implemented with a decoder (not shown) for decoding the decision value input from the third receiver 186 and outputting the decoded result as the restored user information. For example, the first decoder 188 functions to compensate for an error contained in the estimated decision value output from the third receiver 186 corresponding to the restored transmitted signal to more correctly restore the original user information.

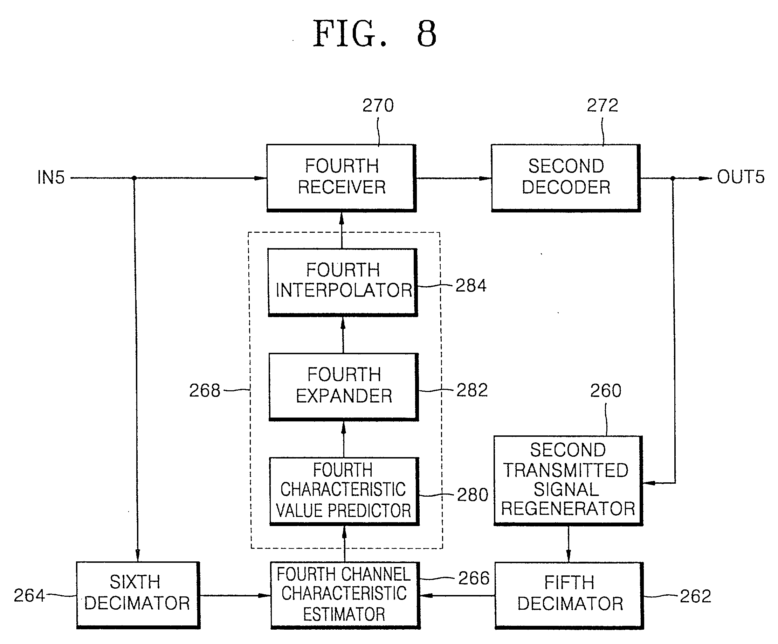

FIG. 8 is a block diagram illustrating the construction of a signal receiving apparatus adapted for use with a time-variant channel according to a fourth embodiment of the present invention.

Referring to FIG. 8, the signal receiving apparatus includes a second transmitted signal regenerator 260, a fifth and sixth decimators 262 and 264, a fourth channel characteristic estimator 266, a fourth channel characteristic predictor 268, a fourth receiver 270 and a second decoder 272.

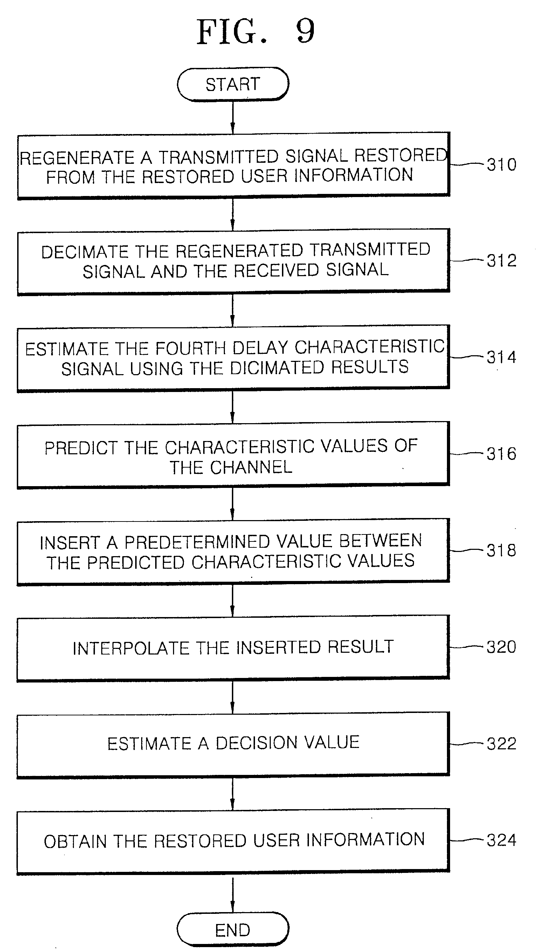

FIG. 9 is a flowchart illustrating a signal receiving method of the present invention to be implemented in the signal receiving apparatus shown in FIG. 8, in which the signal receiving method consists of estimating the delay characteristic of a channel (steps 310 through 314), predicting the characteristic of the channel (steps 316 through 320) and obtaining a decision value and restored user information (steps 322 and 324).

Unlike the signal receiving apparatus shown in FIG. 6, the signal receiving apparatus shown in FIG. 8 does not perform a decimation operation when predicting the characteristic of the channel, but performs it just prior to the estimation of the delay characteristic of the channel. Except for this, the signal receiving apparatus shown in FIG. 8 and the signal receiving method shown in FIG. 9 to be implemented in the signal receiving apparatus are identical to those as shown in FIGs. 6 and 7.

First, the second transmitted signal regenerator 180 regenerates the transmitted signal restored from the restored user information output from the second decoder 272 and outputs the regenerated transmitted signal to the fifth decimator 262 (step 310). For this purpose, the second transmitted signal regenerator 260 has the same construction and operation as those of the first transmitted signal regenerator 180 shown in FIG. 6. That is, the second transmitted signal regenerator 260 may be implemented with the encoder (not shown) and the modulator (not shown) as mentioned above. For example, in the case where the modulator 12 shown in FIG. 1 modulates the transmitted information in a binary phase shift keying (BPSK) scheme, the modulator (not shown) included in the first or second transmitted signal regenerator 180 or 260 regenerates the restored transmitted signal from the restored user information, in a BPSK scheme.

After step 310, the regenerated transmitted signal and the received signal are decimated (step 312). For this purpose, the fifth decimator 262 decimates the regenerated transmitted signal input from the second transmitted signal regenerator 260 and outputs the decimated result of the regenerated transmitted signal to the fourth channel characteristic estimator 266. Also, the sixth decimator 264 decimates the received signal input from the input terminal IN5 and outputs the decimated result of the received signal to the fourth channel characteristic estimator 266.

After step 312, the fourth channel characteristic estimator 266 estimates a fourth delay characteristic signal representing the delay characteristic of the channel 14 from the decimated results input from the fifth and sixth decimators 262 and 264, and outputs the estimated fourth delay characteristic signal to the fourth channel characteristic predictor 268 (step 314).

After step 314, the fourth channel characteristic predictor 268 predicts the characteristic values of the channel 14 from the fourth delay characteristic signal input from the fourth channel characteristic estimator 266, interpolate the predicted channel characteristic values, and output the interpolated result of the channel characteristic values as a fourth predictive characteristic signal representing the predicted characteristic of the channel 14 to the fourth receiver 270 (steps 316 through 320).

To perform these operations, the fourth channel characteristic predictor 268 may be implemented with a fourth characteristic value predictor 280, a fourth expander 282 and a fourth interpolator 284. Herein, after step 314, the fourth characteristic value predictor 280 predicts the characteristic values of the channel 14 from the fourth delay characteristic signal input from the fourth channel characteristic estimator 266, and outputs the predicted channel characteristic values to the fourth expander 282 (step 316). After step 316, the fourth expander 282 inserts a predetermined value, for example, "0" between the predicted channel characteristic values input from the fourth characteristic value predictor 280, and output the inserted result to the fourth interpolator 284 (step 318). After step 318, the fourth interpolator 284 interpolates the inserted result input from the fourth expander 282, and output the interpolated result as a fourth predictive characteristic signal to the fourth receiver 270 (step 320).

After step 320, the fourth receiver 270 acts to estimate a decision value from the fourth predictive characteristic signal input from the fourth channel characteristic predictor 268 and the received signal input from the input terminal IN5 and output the estimated decision value to the second decoder 272 (step 322). After step 322, the second decoder 272 decodes the estimated decision value input from the fourth receiver 270 and output the decoded result as the restored user information obtained by restoring the original user information to the second transmitted signal regenerator 260 while outputting it through an output terminal OUT5 (step 324). For this purpose, the second decoder 272 may be implemented with a decoder (not shown) for decoding the decision value input from the fourth receiver 270 and outputting the decoded result as the restored user information. For example, the second decoder 272 functions to compensate for an error contained in the estimated decision value output from the fourth receiver 270 corresponding to the restored transmitted signal to more correctly restore the original user information.

When the transmitted signal restored in the first or second receiver 40 or 118 shown in FIG. 2 or FIG. 4 is erroneously estimated so that it has an error, the first or second predictive characteristic signal generated from the first or second channel characteristic predictor 42 or 116 may has an error. To overcome this problem, as shown in FIG. 6 or FIG. 8, the restored user information may be employed instead of the restored transmitted signal, to estimate the delay characteristic of the channel used to predict the characteristic of the channel.

In the meantime, for a better understanding of the present invention, an exemplary operation of each of the constituent elements of the signal receiving apparatus adapted for use with a time-variant channel according to the present invention shown in FIGs. 2, 4, 6 and 8, respectively, will be described in detail hereinafter.

First, assuming that the length of the channel 14 is M, and the received signal $y_k$ is given by the following [Expression 1]:

[Expression 1]

$$y_k = h^H_k x_k + n_k$$

where k denotes time, $n_k$ denotes a noise, $\mathbf{h}^H_k$ denotes an impulse response of the channel 14, in which $\mathbf{h}_k$ can be written as the following [Expression 2], and $\mathbf{x}_k$ as the transmitted signal can be written as the following [Expression 3]:

[Expression 2]

$$h_k = [h_{k,o}, h_{k,1} \ldots h_{k,M}]^T$$

[Expression 3]

$$X_k = = [X_k X_{k-1} \ldots X_{k-M}]^T$$

where T denotes a transpose.

At this time, each of the first, second, third and fourth channel characteristic estimators 44, 114, 182 and 266 can estimate the delay characteristic of the channel using, for example, Least Mean Squares (LMS) method, Recursive Least Squares (RLS) method or Kalman method. All these methods estimate a channel for minimizing an error $(e_k)$. Herein, the error $(e_k)$ is given by the following [Expression 4]:

[Expression 4]

$$e_k = y_k - \hat{h}^H_{k-1} x^H_k$$

where assuming that the time taken to estimate a decision value in the first, second, third or fourth receiver 40, 118, 186 or 270 is D (herein, D is identical to the above-mentioned $\tau$), [Expression 4] can be written as the following [Expression 5]:

[Expression 5]

$$e_{k-D} = y_{k-D} - \hat{h}^H_{k-1-D} x^H_{k-D}$$

Using a delayed error $(e_k)$ as defined in [Expression 5], the characteristic of the channel, that is, amplitude and/or phase are/is estimated. Thus, the first, second, third or fourth delay characteristic signal estimated by using the delayed error $(e_k)$ corresponds to $\mathbf{h}_{k-D}$. The above-mentioned LMS, RLS and Kalman methods are described in Haykins, "Adaptive filter theory", Prentice Hall Press, pp. 365-439, pp. 562-587 and pp. 302-334 (1996), respectively.

At this time, the first or fourth decimator 52 or 200 selects one characteristic value every L period from the characteristic values of the first or third delay characteristic signal input from the first or third channel characteristic estimator 44 or 182, and outputs the selected characteristic value to the first or third characteristic value predictor 50 or 202. The third or sixth decimator 112 or 264 selects one characteristic value every L period from the characteristic values of the received signal input from the input terminal IN3 or IN5, and outputs the selected characteristic value to the second or fourth channel characteristic estimator 114 or 266. Also, The second or fifth decimator 110 or 262 selects one characteristic value every L period from the characteristic values of the restored or regenerated transmitted signal input from the second receiver 118 or the second transmitted signal regenerator 260, and outputs the selected characteristic value to the second or fourth channel characteristic estimator 114 or 266.

At this time, the first, second, third or fourth characteristic value predictor 50, 120, 202 or 280 obtains first, second, third or fourth predictive characteristic signal $h_k$ which is given by the following [Expression 6] using a linear prediction method from the estimated first, second, third or fourth delay characteristic signal:

[Expression 6]

$$\hat{h}_k = \sum_{i=1}^{N} W_i \hat{h}_{k-iL}$$

where $\mathbf{W}_i$ is a weighted value, which can be written as the following [Expression 7]:

## [Expression 7]

$$\mathbf{W_i} = \begin{bmatrix} w_{i,1} & 0 & \cdots & 0 \\ 0 & w_{i,2} & \cdots & 0 \\ \vdots & \vdots & \vdots & \vdots \\ 0 & \cdots & 0 & w_{i,M} \end{bmatrix}$$

where $\mathbf{W_i} = [w_{1,J}, ..., w_{N,J}]$ is can be obtained by using Wiener-Hopf equation defined by the following [Expression 8]

## [Expression 8]

$$R_j W_j = p_j$$

where $\mathbf{R_j}$ denotes an autocorrelation matrix, which is given by the following [Expression 9], $\mathbf{w_j}$ denotes a weighted vector, and $\mathbf{p_j}$ denotes a cross-correlation vector, which is given by the following [Expression 10]:

## [Expression 9]

$$\mathbf{R_j} = \begin{bmatrix} r_j(0) & r_j(1) & \cdots & r_j(N-1) \\ r^*_j(1) & r_j(0) & \cdots & r_j(N-2) \\ \vdots & \vdots & \vdots & \vdots \\ r^*_j(N-1) & \cdots & r^*_j(1) & r_j(0) \end{bmatrix}$$

## [Expression 10]

$$p_j = [r_j(1)...r_j(N)]$$

where $r_j(i)$ is given by the following [Expression 11]:

## [Expression 11]

$$r_j(i) = E[h_{k,j}h_{k-Li,j}]$$

where $\mathbf{E}[\ ]$ denotes an expectation value.

The above-mentioned linear prediction method and Wiener-Hopf equation are described in Haykins, "Adaptive filter theory", Prentice Hall Press, pp. 241-245 (1996).

Like this, the characteristic values predicted by the first, second, third or fourth characteristic value predictor 50, 120, 202 or 280 is output to the first, second, third or fourth expander 48, 122, 204 or 282 which inserts a predetermined value of "0" between the predicted characteristic values, and outputs the inserted result to the first, second, third or fourth interpolator 46, 124, 206 or 284. At this time, the first, second, third or fourth interpolator 46, 124, 206 or 284 interpolates the inserted result input from the first, second, third or fourth expander 48, 122, 204 or 282 using, for example, a linear interpolation method such as a raised cosine interpolate technique, and outputs the interpolated result as the first, second, third or fourth predictive characteristic signal to the first, second, third or fourth receiver 40, 118, 186 and 270, respectively, Herein, various interpolation methods for interpolating the inserted result applied to the first, second, third or fourth interpolator 46, 124, 206 or 284 from the first, second, third or fourth expander 48, 122, 204 or 282 are described in Proakis, "Digital Signal Processing", Prentice Hall Press, pp. 765-774 (1996).

Meanwhile, the first or second receiver 40 or 118 shown in FIG. 2 or 4 has the delay time D to estimate the decision value, whereas the third or fourth receiver 186 or 270 shown in FIG. 6 or 8 may have or not have the delay time D to estimate the decision value. Also, unlike the signal receiving apparatus shown in FIG. 2 or 6, the signal receiving apparatus shown in FIG. 4 or 8 performs a decimation operation prior to the estimation of the delay characteristic of the channel. Therefore, the second or fourth channel characteristic estimator 114 or 266 may have less amount of computation to estimate the delay characteristic of the channel compared with the first or third channel characteristic estimator 44 or 182, which results in a minimization of the apparatus and a reduction in power consumption.

For a better understanding of the present invention, when assuming that a symbol rate is 25Ksps (symbol per second), a carrier frequency $f_c$ is 900MHz, the size of frames or the number of items of transmitted information is 100 (symbols), a unit frame consists of 10 transmitted information already well-known to a transmitting side and a signal receiving apparatus and 90 transmitted information not well-known, the tap number of the channel 14 is 2, the channel 14 is a rayleigh fading channel, N is an Additive White Gaussian Noise (AWGN), the delay characteristic of the channel is estimated by the LMS method having the size of step ranging from 0.1 to 0.5, D=50(symbols), the modulator 12 performs a modulation using the BPSK scheme, L=50, a conventional signal receiving apparatus has the delay time of 2-4(symbols) so that a receiving side thereof obtains a decision value, the comparison between the signal receiving apparatus and method according to the present invention and the signal receiving apparatus and method according to the prior art will be made hereinafter.

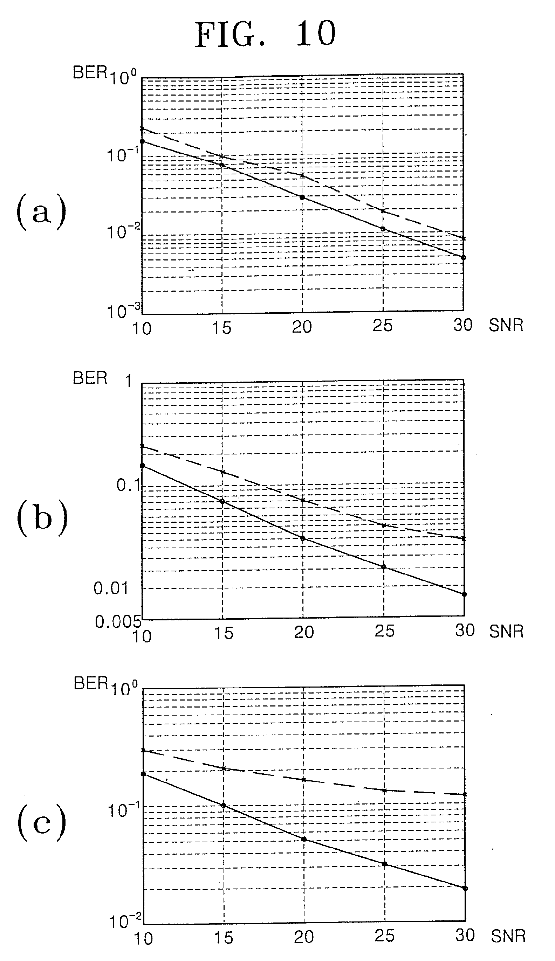

FIGs. 10(a) to 10(c) are graphs illustrating the comparison of the characteristics between the signal receiving apparatus and method according to the present invention and a signal receiving apparatus and method according to the prior art.

Referring to FIGs. 10(a) to 10(c), a horizontal axis of each graph represents Signal-to-Noise Ratio (SNR), and a vertical axis thereof represents Bit Error Rate (BER). Also, a maximum Doppler frequency ($f_d$) is 50Hz in FIG. 10(a), $f_d$ is 100Hz in FIG. 10(b), and $f_d$ is 200Hz in FIG. 10(c). Further, a doted line of the graph denotes a signal receiving method according to the prior art and a solid line thereof denotes a signal receiving method according to the present invention, respectively.

A variation of the channel In FIG. 10(a) is slower than that in FIG, 10(b), whereas a variation of the channel In FIG. 10(c) is faster than that in FIG, 10(b). Therefore, it can be seen that as a variation of the channel becomes faster, the signal receiving method according to the present invention has BER smaller than that according to the prior art. Accordingly, the present invention has a more excellent ability of restoring user information than the prior art.

As described above, the signal receiving apparatus and method adapted for use with a time-variant channel according to the present invention has an advantage that a correct prediction of the characteristic of the channel allows a more correct restoration of original user information, and there is no need to obtain a tentative decision value, thereby results in a reduction in the manufacturing cost along with achievement of a simpler structure of hardware.

While this invention has been particularly shown and described with reference to preferred embodiments thereof, it will be understood by those skilled in the art that various modifications, permutations and equivalents may be made without departing from the spirit of the invention. Also, it should be understood that the phraseology or terminology employed herein is for the purpose of description and not of limitation. The scope of the invention, therefore, is to be determined solely by the appended claims.

## Claims

1. A signal receiving apparatus adapted for use with a time-variant channel, the signal receiving apparatus which receives, as a received signal, a signal transmitted through the channel with a time-varying characteristic and which restores original user information from the received signal, comprising:

    a first channel characteristic estimator to estimate a first delay characteristic signal representing a delay characteristic of the channel from a transmitted signal restored and the received signal, and output the estimated first delay characteristic signal;
    a first channel characteristic predictor to decimate the estimated first delay characteristic signal input from the first channel characteristic estimator, predict the characteristic values of the channel from the decimated result of the first delay characteristic signal, interpolate the predicted channel characteristic values, and output the interpolated result of the channel characteristic values as a first predictive characteristic signal representing the predicted characteristic of the channel; and
    a first receiver adapted to estimate a decision value from the first predictive characteristic signal and the received signal, restore the transmitted signal from the estimated decision value, and output the restored transmitted signal to the first channel characteristic estimator,

whereby the original user information is restored from the decision value.

2. The signal receiving apparatus as claimed claim 1, wherein the first channel characteristic predictor comprising:

a first decimator to decimate the first delay characteristic signal input from the first channel characteristic estimator, and output the decimated result of the first delay characteristic signal;

a first characteristic value predictor to predict the characteristic values of the channel from the decimated result of the first delay characteristic signal input from the first decimator, and output the predicted channel characteristic values;

a first expander to insert a predetermined value between the predicted channel characteristic values input from the first characteristic value predictor, and output the inserted result; and

a first interpolator to interpolate the inserted result input from the first expander, and output the interpolated result as the first predictive characteristic signal to the first receiver.

3. A signal receiving method performed in the signal receiving apparatus adapted for use with a time-variant channel according to claim 1, comprising the steps of:

(a) estimating the first delay characteristic signal using the received signal and the restored transmitted signal;

(b) decimating the estimated first delay characteristic signal, predicting the characteristic values of the channel from the decimated result of the first delay characteristic signal and interpolating the predicted channel characteristic values so as to obtain the first predictive characteristic signal; and

(c) estimating the decision value from the first predictive characteristic signal and the received signal, and restoring the transmitted signal from the estimated decision value so as to obtain the restored transmitted signal.

4. The signal receiving method as claimed in claim 3, wherein the decimating step (b) comprising the steps of:

(b1) decimating the first delay characteristic signal estimated at the step (a);

(b2) predicting the characteristic values of the channel from the decimated result of the first delay characteristic signal;

(b3) inserting a predetermined value between the predicted characteristic values; and

(b4) interpolating the inserted result to obtain the first predictive characteristic signal, and proceeding to the step (c).

5. A signal receiving apparatus adapted for use with a time-variant channel, the signal receiving apparatus which receives, as a received signal, a signal transmitted through the channel with a time-varying characteristic and restores original user information from the received signal, comprising:

a second decimator to decimate a transmitted signal restored and output the decimated result of the restored signal;

a third decimator to decimate the received signal and output the decimated result of the received signal;

a second channel characteristic estimator to estimate a second delay characteristic signal representing the delay characteristic of the channel from the decimated results input from the second and third decimators, and output the estimated second delay characteristic signal;

a second channel characteristic predictor to predict characteristic values of the channel from the second delay characteristic signal input from the second channel characteristic estimator, interpolate the predicted channel characteristic values, and output the interpolated result of the channel characteristic values as a second predictive characteristic signal representing the predicted characteristic of the channel; and

a second receiver to estimate a decision value from the second predictive characteristic signal and the received signal, restore the transmitted signal from the estimated decision value, and output the restored transmitted signal to the second decimator,

whereby the original user information is restored from the decision value.

6. The signal receiving apparatus as claimed in claim 5, wherein the second channel characteristic predictor comprising:

a second characteristic value predictor to predict the characteristic values of the channel from the second delay characteristic signal input from the second channel characteristic estimator, and output the predicted channel characteristic values;

a second expander to insert a predetermined value between the predicted channel characteristic values input from the second characteristic value predictor, and output the inserted result; and

a second interpolator to interpolate the inserted result input from the second expander, and output the interpolated result as the second predictive characteristic signal to the second receiver.

7. A signal receiving method performed in the signal receiving apparatus adapted for use with a time-variant channel according to claim 5, comprising the steps of:

(a) decimating the transmitted signal restored and the received signal;

(b) estimating the second delay characteristic signal using the decimated results;

(c) predicting the characteristic values of the channel from the estimated second delay characteristic signal and interpolating the predicted channel characteristic values so as to obtain the second predictive characteristic signal; and

(d) estimating the decision value from the second predictive characteristic signal and the received signal, and restoring the transmitted signal from the estimated decision value so as to obtain the restored transmitted signal.

8. The signal receiving method as claimed in claim 7, wherein the predicting step (c) comprising the steps of:

(c1) predicting the characteristic values of the channel from the second delay characteristic signal estimated in the step (b);

(c2) inserting a predetermined value between the predicted characteristic values; and

(c3) interpolating the inserted result to obtain the second predictive characteristic signal, and proceeding to the step (d).

9. A signal receiving apparatus adapted for use with a time-variant channel, the signal receiving apparatus which receives, as a received signal, a signal transmitted through the channel with a time-varying characteristic and restores original user information from the received signal, comprising:

a first transmitted signal regenerator to regenerate a transmitted signal restored from a restored user information and output the regenerated transmitted signal;

a third channel characteristic estimator to estimate a third delay characteristic signal representing the delay characteristic of the channel from the regenerated transmitted signal input from the first transmitted signal regenerator and the received signal, and output the estimated third delay characteristic signal;

a third channel characteristic predictor to decimate the third delay characteristic signal input from the third channel characteristic estimator, predict characteristic values of the channel from the decimated result of the third delay characteristic signal, interpolate the predicted channel characteristic values, and output the interpolated result of the channel characteristic values as a third predictive characteristic signal representing predicted characteristic of the channel;

a third receiver to estimating a decision value from the third predictive characteristic signal input from the third channel characteristic predictor and the received signal and output the estimated decision value; and

a decoder to decode the estimated decision value input from the third receiver and output the decoded result as the restored user information obtained by restoring the original user information to the first transmitted signal regenerator.

10. The signal receiving apparatus as claimed claim 9, wherein the third channel characteristic predictor comprising:

a fourth decimator to decimate the third delay characteristic signal input from the third channel characteristic estimator, and output the decimated result of the third delay characteristic signal;

a third characteristic value predictor to predict the characteristic values of the channel from the decimated result of the third delay characteristic signal input from the fourth decimator, and output the predicted channel characteristic values;

a third expander to insert a predetermined value between the predicted channel characteristic values input from the third characteristic value predictor, and output the inserted result; and

a third interpolator to interpolate the inserted result input from the third expander, and output the interpolated result as the third predictive characteristic signal to the third receiver.

**11.** A signal receiving method performed in the signal receiving apparatus adapted for use with a time-variant channel according to claim 9, comprising the steps of:

(a) regenerating a transmitted signal restored from the restored user information and obtaining the regenerated transmitted signal;
(b) estimating the third delay characteristic signal using the regenerated transmitted signal and the received signal;
(c) decimating the estimated third delay characteristic signal, predicting the characteristic values of the channel from the decimated result of the third delay characteristic signal, interpolating the predicted channel characteristic values so as to obtain the third predictive characteristic signal;
(d) estimating the decision value from the third predictive characteristic signal and the received signal; and
(e) decoding the estimated decision value so as to obtain the restored user information.

**12.** The signal receiving method as claimed in claim 11, wherein the decimating step (c) comprising the steps of:

(c1) decimating the third delay characteristic signal estimated in the step (b);
(c2) predicting the characteristic values of the channel from the decimated result of the third delay characteristic signal;
(c3) inserting a predetermined value between the predicted characteristic values; and
(c4) interpolating the inserted result to obtain the third predictive characteristic signal, and proceeding to the step (d).

**13.** A signal receiving apparatus adapted for use with a time-variant channel, the signal receiving apparatus which receives, as a received signal, a signal transmitted through the channel with a time-varying characteristic and restores original user information from the received signal, comprising:

a second transmitted signal regenerator to regenerate a transmitted signal restored from restored user information and output the regenerated transmitted signal;
a fifth decimator to decimate the regenerated transmitted signal input from the second transmitted signal regenerator and output the decimated result of the regenerated transmitted signal;
a sixth decimator to decimate the received signal and output the decimated result of the received signal;
a fourth channel characteristic estimator to estimate a fourth delay characteristic signal representing the delay characteristic of the channel from the decimated results input from the fifth and sixth decimators, and output the estimated fourth delay characteristic signal;
a fourth channel characteristic predictor to predict characteristic values of the channel from the fourth delay characteristic signal input from the fourth channel characteristic estimator, interpolate the predicted channel characteristic values, and output the interpolated result of the channel characteristic values as a fourth predictive characteristic signal representing the predicted characteristic of the channel;
a fourth receiver to estimate a decision value from the fourth predictive characteristic signal and the received signal, and output the estimated decision value; and
a second decoder to decode the estimated decision value input from the fourth receiver and output the decoded result as the restored user information obtained by restoring the original user information to the second transmitted signal regenerator.

**14.** The signal receiving apparatus as claimed in claim 13, wherein the fourth channel characteristic predictor comprising:

a fourth characteristic value predictor to predict the characteristic values of the channel from the fourth delay characteristic signal input from the fourth channel characteristic estimator, and output the predicted channel characteristic values;
a fourth expander to insert a predetermined value between the predicted channel characteristic values input from the fourth characteristic value predictor, and output the inserted result; and
a fourth interpolator to interpolate the inserted result input from the fourth expander, and output the interpolated result as the fourth predictive characteristic signal to the fourth receiver.

**15.** A signal receiving method performed in the signal receiving apparatus adapted for use with a time-variant channel according to claim 13, comprising the steps of:

(a) regenerating a transmitted signal restored from the restored user information and obtaining the regenerated transmitted signal;
(b) decimating the regenerated transmitted signal and the received signal;
(c) estimating the fourth delay characteristic signal using the decimated results;
(d) predicting the characteristic values of the channel from the estimated fourth delay characteristic signal and interpolating the predicted channel characteristic values so as to obtain the fourth predictive characteristic signal;
(e) estimating the decision value from the fourth predictive characteristic signal and the received signal; and
(f) decoding the estimated decision value so as to obtain the restored user information.

16. The signal receiving method as claimed in claim 15, wherein the predicting step (d) comprising the steps of:

(d1) predicting the characteristic values of the channel from the fourth delay characteristic signal estimated in the step (c);
(d2) inserting a predetermined value between the predicted characteristic values; and
(d3) interpolating the inserted result to obtain the fourth predictive characteristic signal, and proceeding to the step (e).

17. The signal receiving apparatus as claimed in claim 1 or 2, wherein the characteristic of the channel corresponds to amplitude.

18. The signal receiving apparatus as claimed in claim 1 or 2, wherein the characteristic of the channel corresponds to phase.

19. The signal receiving apparatus as claimed in claim 1 or 2, wherein the characteristic of the channel corresponds to amplitude and phase.

20. The signal receiving apparatus as claimed in claim 1 or 2, wherein the first channel characteristic estimator is adapted to estimate the first delay characteristic signal by minimizing an error ($e_k$) being the difference between the measured received signal and values calculated from the estimated first delay characteristic and the restored transmitted signal.

21. The signal receiving apparatus as claimed in claim 20, wherein the first channel characteristic estimator estimates the delay characteristic of the channel using Least Mean Square (LMS) method.

22. The signal receiving apparatus as claimed in claim 20, wherein the first channel characteristic estimator estimates the delay characteristic of the channel using Recursive Least Square (RLS) method.

23. The signal receiving apparatus as claimed in claim 20, wherein the first channel characteristic estimator estimates the delay characteristic of the channel using Kalman method.

24. A signal receiving method according to claim 3 or 4 wherein step (a) includes estimating the first delay characteristic signal by minimizing an error ($e_k$) being the difference between the measured received signal and the values calculated from the estimated first delay characteristic and the restored transmitted signal.

# FIG. 1

IN1 → **ENCODER** (10) → **MODULATOR** (12) → **CHANNEL** (14) → (+) (16) ← N → **SIGNAL RECEIVING APPARATUS** (18) → OUT1

# FIG. 2

IN2 → **FIRST RECEIVER** (40) → OUT2

**FIRST INTERPOLATOR** (46)

**FIRST EXPANDER** (48)

**FIRST CHARACTERISTIC VALUE PREDICTOR** (50)

**FIRST DECIMATOR** (52)

(42)

**FIRST CHANNEL CHARACTERISTIC ESTIMATOR** (44)

# FIG. 3

START

OBTAIN FIRST DELAY CHARACTERISTIC SIGNAL USING A RECEIVED SIGNAL AND A RESTORED TRANSMITTED SIGNAL — 80

DECIMATE THE FIRST DELAY CHARACTERISTIC SIGNAL — 82

PREDICT THE CHARACTERISTIC VALUES OF THE CHANNEL — 84

INSERT A PREDETERMINED VALUE BETWEEN THE PREDICTED CHARACTERISTIC VALUES — 86

INTERPOLATE THE INSERTED RESULT — 88

OBTAIN A DECISION VALUE AND THE RESTORED TRANSMITTED SIGNAL — 90

END

# FIG. 4

# FIG. 5

START

DECIMATE A RESTORED TRANSMITTED SIGNAL AND A RECEIVED SIGNAL —140

ESTIMATE THE SECOND DELAY CHARACTERISTIC SIGNAL USING THE DICIAMTED RESULTS —142

PREDICT THE CHARACTERISTIC VALUES OF THE CHANNEL —144

INSERT A PREDETERMINED VALUE BETWEEN THE PREDICTED CHARACTERISTIC VALUES —146

INTERPOLATE THE INSERTED RESULT —148

OBTAIN A DECISION VALUE AND THE RESTORED TRANSMITTED SIGNAL —150

END

# FIG. 6

IN4 → 186 ┐

THIRD RECEIVER (186)

FIRST DECODER (188) → OUT4

THIRD INTERPOLATOR — 206

THIRD EXPANDER — 204

THIRD CHARACTERISTIC VALUE PREDICTOR — 202

FOURTH DECIMATOR — 200

184 —

THIRD CHANNEL CHARACTERISTIC ESTIMATOR

— 182

FIRST TRANSMITTED SIGNAL REGENERATOR (180)

# FIG. 7

START

REGENERATE A TRANSMITTED SIGNAL RESTORED FROM THE RESTORED USER INFORMATION — 220

ESTIMATE THIRD DELAY CHARACTERISTIC SIGNAL USING THE REGENERATED TRANSMITTED SIGNAL AND THE RECEIVED SIGNAL — 222

DECIMATE THE ESTIMATED THIRD DELAY CHARACTERISTIC SIGNAL — 224

PREDICT THE CHARACTERISTIC VALUES OF THE CHANNEL — 226

INSERT A PREDETERMINED VALUE BETWEEN THE PREDICTED CHARACTERISTIC VALUES — 228

INTERPOLATE THE INSERTED RESULT — 230

ESTIMATE A DECISION VALUE — 232

OBTAIN THE RESTORED USER INFORMATION — 234

END

# FIG. 8

SECOND
DECODER — 272

FOURTH
RECEIVER — 270

IN5

OUT5

FOURTH
INTERPOLATOR — 284

FOURTH
EXPANDER — 282

268

FOURTH
CHARACTERISTIC
VALUE PREDICTOR — 280

SECOND
TRANSMITTED
SIGNAL
REGENERATOR — 260

SIXTH
DECIMATOR — 264

FOURTH CHANNEL
CHARACTERISTIC
ESTIMATOR

266

FIFTH
DECIMATOR — 262

EP 1 276 287 A2

# FIG. 9

START

REGENERATE A TRANSMITTED SIGNAL RESTORED
FROM THE RESTORED USER INFORMATION — 310

DECIMATE THE REGENERATED TRANSMITTED
SIGNAL AND THE RECEIVED SIGNAL — 312

ESTIMATE THE FOURTH DELAY CHARACTERISTIC
SIGNAL USING THE DICIMATED RESULTS — 314

PREDICT THE CHARACTERISTIC VALUES OF
THE CHANNEL — 316

INSERT A PREDETERMINED VALUE BETWEEN
THE PREDICTED CHARACTERISTIC VALUES — 318

INTERPOLATE THE INSERTED RESULT — 320

ESTIMATE A DECISION VALUE — 322

OBTAIN THE RESTORED USER INFORMATION — 324

END

# FIG. 10